# EUROPEAN PATENT APPLICATION

(11) **EP 3 536 152 A1**
(43) Date of publication of application: **11.09.2019**
(21) Application number: 19164439.2
(22) Date of filing: 26.06.2013
(51) Int. Cl.: A01N 59/16, C08K 3/08, C08L 101/00, A01P 1/00, A01P 3/00

(54) **SILVER-CONTAINING CONCENTRATE**

(30) Priority: 29.06.2012 CN 201210224369
(62) Divisional of application: 13809782.9
(71) Applicant: Rohm and Haas Company, Philadelphia, PA 19106-2399 (US); Dow Global Technologies LLC, Midland, MI 48674 (US)
(72) Inventor: GHOSH, Tirthankar, Oreland, PA 19075 (US)
(74) Representative: Kent, Venetia Katherine

(57) **Abstract**

A method is provided for making a silver-containing concentrate. The method comprises the step of isolating the solid materials from a liquid composition that comprises (a) silver cation, (b) a polymer that has pendant unsaturated or aromatic heterocycles, and (c) solid particles having median diameter of 2 mm or smaller.

## Description

Undesirable growth of microbes often occurs on the surface of a plastic article. It is desirable to incorporate antimicrobial materials into the plastic so as to inhibit or prevent the growth of such microbes.

US 7,846,856 discloses polymer fibers that contain antimicrobial composition that comprises a metal complexed with a complexing polymer. The methods taught by US 2007/0006391 involve drying the antimicrobial composition and then directly adding the dried antimicrobial composition to a relatively large amount of plastic. It has been found that dried antimicrobial compositions like those taught by US 7,846,856 have a tendency to discolor when heated, and they do not disperse well when added directly to plastics.

It is desired to produce antimicrobial compositions having one or more of the following advantages: that have reduced tendency toward discoloration when heated; that disperse well when added directly to plastics. It is also desired to produce antimicrobial compositions that, when added to plastics, produce plastic articles that have antimicrobial activity on the surface of the article and that maintain that antimicrobial activity over time.

The following is a statement of the invention.

An aspect of the present invention is a method for making a silver-containing concentrate. The method comprises the step of isolating the solid materials from a liquid composition that comprises (a) silver cation, (b) a polymer that has pendant unsaturated or aromatic heterocycles, and (c) solid particles having median diameter of 2 mm or smaller.

The following is a detailed description of the invention.

As used herein, the following terms have the designated definitions, unless the context clearly indicates otherwise.

"Silver ion" has charge +1.

The term "microbicide", "biocide", "preservative" or "antimicrobial compound" refers to a compound capable of killing, inhibiting the growth of, or controlling the growth of microorganisms at a locus; microbicides include bactericides, fungicides and algaecides. The term "microorganism" includes, for example, fungi (such as yeast and mold), bacteria, and algae. The term "locus" refers to a system or product, or surface thereof, that is subject to contamination by microorganisms.

Microorganisms that are affected by microbicide include, but are not limited to, *Aureobasidium pullulans, Bacillus cereus, Bacillus thuringiensis, Chaetomium globosum, Enterobacter aerogines, Escherichia coli, Gliocladtum virens, Klebsiella Pheumoniae, Legionella pneumpophila, Listeria Monocytogenes, Mycobacterium, tuberculosis, Porphyromonas gingivalis, Proteus mirabilis, Proteus vulgaris, Pseudomonas aeruginosa, Saccharomyces cerevisiae, Salmonella gallinarum, Salmonella typhimurium, Staphylococcus aureus, Staphylococcus epidermidis, Streptococcus agalactiae, Streptococcus faecalis, Streptococcus mutans, Trycophyton malmsten, Vibrio parahaemolyticus, Stachybotrys, Aspergillus niger, Candida albicans* and *Penicillium funiculosum.*

Unless otherwise specified, temperatures discussed herein are in degrees centigrade (°C), and references to percentages (%) and parts per million (ppm) are by weight.

A "polymer," as used herein and as defined by FW Billmeyer, JR. in Textbook of Polymer Science, second edition, 1971, is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymer molecular weights can be measured by standard methods such as, for example, size exclusion chromatography (SEC, also called gel permeation chromatography or GPC). Polymers have number-average molecular weight (Mn) of 500 or more. Polymers may have extremely high Mn; some polymers have Mn above 1,000,000; typical polymers have Mn of 1,000,000 or less. Some polymers are crosslinked, and crosslinked polymers are considered to have infinite Mn.

As used herein "weight of polymer" means the dry weight of polymer.

Molecules that can react with each other to form the repeat units of a polymer are known herein as "monomers."

One example of a class of monomers that are useful in the present invention are, for example, ethylenically unsaturated monomers (i.e., monomers that have at least one carbon-carbon double bond). Among such monomers are, for example, vinyl monomers, which have the structure 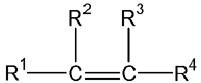 where each of R¹, R², R³, and R⁴ is, independently, a hydrogen, a halogen, an aliphatic group (such as, for example, an alkyl group), a substituted aliphatic group, an aryl group, a substituted aryl group, another substituted or unsubstituted organic group, or any combination thereof.

Some suitable vinyl monomers include, for example, styrene, substituted styrenes, dienes, ethylene, ethylene derivatives, and mixtures thereof. Ethylene derivatives include, for example, unsubstituted or substituted versions of the following: ethenyl esters of substituted or unsubstituted alkanoic acids (including, for example, vinyl acetate and vinyl neodecanoate), acrylonitrile, (meth)acrylic acids, (meth)acrylates, (meth)acrylamides, vinyl chloride, halogenated alkenes, and mixtures thereof. As used herein, "(meth)acrylic" means acrylic or methacrylic; "(meth)acrylate" means acrylate or methacrylate; and "(meth)acrylamide" means acrylamide or methacrylamide. "Substituted" means having at least one attached chemical group such as, for example, alkyl group, alkenyl group, vinyl group, hydroxyl group, carboxylic acid group, other functional groups, and combinations thereof. In some embodiments, substituted monomers include, for example, monomers with more than one carbon-carbon double bond, monomers with hydroxyl groups, monomers with other functional groups, and monomers with combinations of functional groups.

A polymer that is made by polymerizing a certain monomer, either alone or with other monomers, is said herein to include that monomer as a polymerized unit.

A chemical group that is part of a polymer is said herein to be "pendant" if it is covalently attached to the polymer but is not part of the backbone of the polymer chain.

As used herein, a "solvent" is a material that is liquid at 25°C; that has boiling point, at 1 atmosphere pressure, of greater than 25°C; and that is capable of dissolving a polymer (b) of the present invention. A polymer is herein considered dissolved in a solvent if individual polymer chains are in intimate contact with the solvent. Individual dissolved polymer chains may be linear or branched. In typical solutions, each polymer chain is in a random coil configuration or a close approximation thereof. A polymer solution will not settle or form a separate phase upon standing for at least 5 days at 23°C. Some polymer solutions are clear to the naked eye, and some polymer solutions appear hazy.

A solvent may be a pure substance or it may contain plural substances dissolved in each other. For example, a solvent may contain two or more miscible liquids. Material that is solid at 25°C is not considered to be part of the solvent, whether or not it is dissolved in liquid. As used herein, a solvent is "aqueous" if the solvent contains 50% or more water by weight based on the weight of the solvent. All other solvents are considered herein to be nonaqueous.

As used herein, when a ratio is said to be "X:1 or higher (or lower)" it is meant that the ratio has value of Y:1, where Y is equal to X or is higher (or lower). For example, if a certain ratio is said herein to be "3:1 or higher," that ratio may be, for example, 3:1 or 4:1 or 100:1, but that ratio may not be, for example, 2:1 or 1:1. For another example, if a certain ratio is said herein to be "8:1 or lower", that ratio may be, for example, 8:1 or 7:1 or 0.5:1, but that ratio may not be, for example, 9:1 or 10:1.

As used herein, a heterocycle is a cyclic organic radical in which at least one member of the ring is a nitrogen atom, an oxygen atom, or a sulfur atom. A heterocycle is considered herein to be "unsaturated or aromatic" if there is at least one pair of members of the ring in which the two members of that pair are connected to each other by a double bond. A heterocycle is not considered herein to be "unsaturated or aromatic" if all of the members of the ring are connected to each other by single bonds, even if one or more member of the ring is connected by a double bond to an atom that is not a member of the ring.

A collection of particles may be characterized by the median diameter. Half of the mass of the collection is made up of particles that have diameter smaller than the median diameter. Particles may have any shape. Particles may be spheres, rods, disks, irregular shapes, other shapes, or any combination or mixture thereof. If a particle is not spherical, its diameter herein is taken to be the length of the longest chord for that particle; a chord is a straight line segment that passes through the center of mass of the particle and that has each of its end points located on the surface of the particle.

As used herein, a material is "solid" if it is solid at 25°C.

As used herein, a "silver-containing concentrate" is a solid material in which the concentration of silver is from 2 ppm to 5% by weight, based on the weight of the concentrate.

As used herein, the term "isolate" refers to a process in which a solid material begins in an initial mixture with a liquid material and in which the solid material is then separated from the liquid material. The initial mixture of solid and liquid may be a solution, a dispersion, a slurry, or some other form of mixture, or a combination thereof.

The "solids content" of a composition is determined as follows. The composition is heated to a temperature that is 100°C or higher and that is below the decomposition temperature of the composition. The composition is heated under conditions in which volatile materials can escape (such as, for example, convection or vacuum) until the weight of the sample no longer changes appreciably. The solids content is the ratio of the final weight of the composition after heating to the initial weight of the composition prior to heating, expressed as a percentage.

The silver-containing concentrate of the present invention contains one or more polymer, herein called "polymer (b)," that has pendant unsaturated or aromatic heterocycle.

Preferably, polymer (b) is a vinyl polymer. As used herein, a vinyl polymer is a polymer formed from vinyl monomers by polymerization reaction among carbon-carbon double bonds to form the polymer backbone. Preferably, vinyl polymers are made by free-radical polymerization.

Certain types of monomers are useful as polymerized units of polymer (b). These types of monomers are known herein as first monomer, second monomer, third monomer, fourth monomer and fifth monomer, as defined below. As used herein, these types do not overlap. For example, a monomer that meets the definition of first monomer does not meet the definition of second, third, fourth, or fifth monomer, etc.

Polymer (b) has polymerized units of one or more first monomer. A first monomer is monomer with one or more pendant unsaturated or aromatic heterocycle. As used herein, a heterocycle is pendant on a monomer when it is covalently attached to the monomer in such a way that the heterocycle will not participate in the polymerization reaction. That is, the heterocycle will be pendant on the polymer chain after the monomer participates in a polymerization reaction.

Preferred heterocycles are those with 5 or more members of the heterocycle ring. Independently, preferred heterocycles are those with 9 or fewer members of the heterocycle ring; more preferably 7 or fewer members. Each suitable heterocycle has one or more member of the heterocycle ring that is one or more nitrogen, or one or more oxygen, or one or more sulfur, or a combination thereof.

Preferred heterocycles are 5-membered rings with two double bonds. Preferred among such heterocycles are those in which the heteroatom or combination of heteroatoms are chosen from among the following combinations: one sulfur atom; or one nitrogen atom and one oxygen atom; or one nitrogen atom; or two nitrogen atoms; or three nitrogen atoms; or 4 nitrogen atoms. Imidazole is preferred.

Preferred first monomer is vinylimidazole. Preferably, every first monomer is a monomer with a pendant unsaturated or aromatic heterocycle. Preferably, every first monomer is vinylimidazole.

Preferably, the amount of first monomer in polymer (b) is, by weight of the polymerized units of first monomer, based on the weight of polymer (b), 15% or more; more preferably 25% or more; more preferably 35% or more. Preferably, the amount of first monomer in polymer (b) is, by weight of the polymerized units of first monomer, based on the weight of polymer (b), 75% or less; more preferably 65% or less; more preferably 55% or less.

Preferably, polymer (b) contains polymerized units of one or more second monomer. As used herein, a second monomer has no carboxylic acid group and no carboxylate anion. Preferred second monomers are selected from substituted or unsubstituted alkyl esters of (meth)acrylic acid, substituted or unsubstituted amides of (meth)acrylic acid, vinyl acetate, styrene, substituted styrenes, and mixtures thereof. More preferred second monomers are unsubstituted alkyl esters of (meth)acrylic acid.

Preferably, the amount of second monomer in polymer (b) is, by weight of the polymerized units of second monomer, based on the weight of polymer (b), 10% or more; more preferably 20% or more; more preferably 30% or more. Preferably, the amount of second monomer in polymer (b) is, by weight of the polymerized units of second monomer, based on the weight of polymer (b), 80% or less; more preferably 70% or less; more preferably 60% or less, more preferably 50% or less.

Preferably, polymer (b) contains polymerized units of one or more third monomer. As used herein, a third monomer has one or more carboxylic acid group or carboxylate anion. Preferred third monomers are selected from acrylic acid, methacrylic acid, and mixtures thereof.

Preferably, the amount of third monomer in polymer (b) is, by weight of the polymerized units of third monomer, based on the weight of polymer (b), 2% or more; more preferably 5% or more; more preferably 10% or more. Preferably, the amount of third monomer in polymer (b) is, by weight of the polymerized units of third monomer, based on the weight of polymer (b), 45% or less; more preferably 35% or less; more preferably 25% or less.

Optionally, polymer (b) contains polymerized units of one or more fourth monomer. As used herein, a fourth monomer has one or more alkylene oxide chain. As used herein, and alkylene oxide chain is a chemical group with the structure -(-R-O-)ₙ-, where R is a linear or branched alkyl group and n is 1 or greater. Among fourth monomers, preferred are those in which R has 2 to 4 carbon atoms; more preferably R is -CH₂CH₂-. Among fourth monomers, preferred are those in which n is 2 to 20. Preferred fourth monomers are poly(ethylene glycol) methyl ether acrylates and poly(ethylene glycol) methyl ether methacrylates.

If one or more fourth monomer is present, the preferred amount of fourth monomer in polymer (b) is, by weight of the polymerized units of third monomer, based on the weight of polymer (b), 5% or more; more preferably 10% or more; more preferably 15% or more. If one or more fourth monomer is present, the preferred amount of fourth monomer in polymer (b) is, by weight of the polymerized units of third monomer, based on the weight of polymer (b), 75% or less; more preferably 65% or less; more preferably 55% or less.

Optionally, polymer (b) contains polymerized units of one or more fifth monomer. As used herein, a fifth monomer is any monomer that is not a first, second, third, or fourth monomer. Preferably, polymer (b) the amount of polymerized units of fifth monomer in polymer (b) is either zero or is less than 0.1% by weight based on the weight of polymer (b).

Preferably, the number-average molecular weight of polymer (b) is 500 or larger. Preferably, the number-average molecular weight of polymer (b) is 500,000 or less; more preferably 200,000 or less; more preferably 50,000 or less; more preferably 20,000 or less; more preferably 5,000 or less.

Preferably, the silver in the silver-containing concentrate of the present invention is in the form of silver ion, which means that 90% or more of the silver atoms in the concentrate are in the form of silver ion. Preferably, the amount of silver in the silver-containing concentrate of the present invention, by weight based on the weight of the concentrate, is 4% or lower. Preferably, the amount of silver in the silver-containing concentrate of the present invention, by weight based on the weight of the concentrate, is 2 ppm or higher; more preferably 5 ppm or higher; more preferably 10 ppm or higher. Even more preferably, the amount of silver in the silver-containing concentrate of the present invention, by weight based on the weight of the concentrate, is 30 ppm or higher; more preferably 100 ppm or higher; more preferably 300 ppm or higher; more preferably 500 ppm or higher.

The concentrate of the present invention contains solid particles (herein called "solid particles (c)") having median diameter of 2 mm or less. Preferably, the median diameter of solid particles (c) is 1 mm or less. Preferably, the median diameter of solid particles (c) is 2 micrometers or larger; more preferably 5 micrometers or larger; more preferably 10 micrometers or larger. The solid particles (c) may be made of any solid material. Preferred are minerals and polymers. Among minerals, preferred are oxides of silicon, oxides of metals, and oxides of transition metals; more preferred is silica gel. Among polymers, preferred are thermoplastic polymers; more preferred are polyolefins.

The method of the present invention involves the use of a liquid composition herein called the "slurry." The slurry contains silver ion, polymer (b), and solid particles. Preferably, the amounts of the ingredients of the slurry are chosen so that at the end of the process of drying the slurry, the dried residue is a concentrate as defined herein above.

The slurry is a liquid in which the solid particles are distributed in a continuous liquid medium. The distribution of solid particles may be a suspension, a dispersion, a different form of distribution, or a combination thereof. The solid particles may or may not have a tendency to settle if the slurry is not subjected to mechanical agitation.

The continuous liquid medium contains solvent. The solvent is liquid at 25°C. The solvent preferably contains water. The amount of water, by weight based on the weight of solvent, is preferably 5% or more; more preferably 10% or more; more preferably 20% or more. The amount of water, by weight based on the weight of solvent, is preferably 60% or less; more preferably 50% or less; more preferably 40% or less.

The solvent preferably also contains one or more alkyl alcohol. Preferred are alkyl alcohols in which the alkyl group has 2 to 6 carbons. More preferred are ethanol, isopropanol, butanol, and mixtures thereof. The amount of ethanol, by weight based on the weight of solvent, is preferably 30% or more; more preferably 40% or more; more preferably 50% or more. The amount of ethanol, by weight based on the weight of solvent, is preferably 80% or less; more preferably 70% or less.

Also contemplated are embodiments (herein called "high water" embodiments) in which the amount of water in the solvent is, by weight based on the weight of the solvent, more than 50%. Among high water embodiments, the amount of water in the solvent is, by weight based on the weight of the solvent, preferably 75% or more; more preferably 90% or more; more preferably 95% or more.

The amount of silver ion in the slurry is preferably, by weight based on the weight of the slurry, 0.2% or more; more preferably 0.5% or more; more preferably 1% or more. The amount of silver ion in the slurry is preferably, by weight based on the weight of the slurry, 4.5% or less; more preferably 4% or less; more preferably 3% or less.

The amount of polymer (b) in the slurry, by weight of polymer solids based on the weight of the slurry, is preferably 5% or more; more preferably 8% or more; more preferably 10% or more. The amount of polymer (b) in the slurry, by weight of polymer solids based on the weight of the slurry, is preferably 25% or less; more preferably 25% or less.

The amount of solvent in the slurry is preferably, by weight based on the weight of the slurry, 20% or more; more preferably 30% or more. The amount of solvent in the slurry is preferably, by weight based on the weight of the slurry, 70% or less; more preferably 60% or less; more preferably 50% or less.

The amount of solid particles in the slurry is preferably, by weight based on the weight of the slurry, 15% or more; more preferably 25% or more; more preferably 35% or more. The amount of solid particles in the slurry is preferably, by weight based on the weight of the slurry, 60% or less; more preferably 50% or less.

Preferably, in the slurry, polymer (b) is dissolved in the solvent.

Preferably, some or all of the silver ions in the slurry each participates in one or more coordination complex that includes one or more heteroatom that is attached to polymer (b). Such a coordination complex is herein called "silver/polymer (b) complex." Preferably, the heteroatom that participates in the coordination complex is in the pendant unsaturated or aromatic heterocycle that is part of polymer (b). Preferably, the ratio of moles of pendant heterocycles attached to polymer (b) to moles of silver ions is 12:1 or lower; more preferably 10:1 or lower; more preferably 8:1 or lower. Preferably, the mole ratio of moles of pendant heterocycles attached to polymer (b) to moles of silver ions is 0.5:1 or higher; more preferably 1:1 or higher; more preferably 1.01:1 or higher; more preferably 3:1 or higher.

Silver/polymer (b) complex preferably also contains one or more anion. Preferred are hydroxide, nitrate, acetate, and mixtures thereof. Preferred is a mixture of hydroxide and nitrate. Silver/polymer (b) complex preferably also contains one or more cation in addition to silver cation. Preferred is ammonium.

Silver/polymer (b) complex may be made by any method. Suitable methods are taught in US 7,390,774, and US 7,846,856.

The slurry may be made by any method. Preferably, a solution is formed of polymer (b) and silver ions in solvent, and that solution is free of solid particles. Preferably, solid particles (c) are then combined with the solution to form the slurry. Preferably, some or all of the silver ions in the solution participate in a silver/polymer (b) complex. Preferably, the ingredients for the solution, the amount of solution, and the amount of solid particles (c) are chosen so that the result of combining the solution with the solid particles (c) is the slurry described herein above.

In the practice of the present invention, the solid material is isolated from the slurry. This isolation may be accomplished by any method. Isolation is considered complete when 95% or more of the solvent has been removed, by weight based on the total weight of solvent in the slurry. Preferably, at the end of the isolation process, the amount of solvent that is removed by the isolation process, by weight based on the total weight of solvent in the slurry, is 98% or more; more preferably 99% or more. Preferably, the materials that remain after the solvent has been removed form a silver concentrate without addition of any additional material. Preferably, isolation is performed by evaporating the solvent.

Preferably, in the silver concentrate that is formed by the process of the present invention, some or all of the solid particles (c) have a coating that contains silver ion and polymer (b). On a single solid particle (c) that is coated, the form of the coating may be one of the following or a combination of two or more of the following: (I) a continuous layer of coating material on the surface of the solid particle, which may cover all or part of the solid particle (c); (II) two or more unconnected patches of a layer of the coating material on the surface of the solid particle (c); (III) multiple solid particles of coating material that are present on the surface of the solid particle (c). The coating may have one form on one particle (c) and another form on a different particle (c). Preferably, some or all of the particles (c) have coating of form (III).

Preferably, in the silver concentrate that is formed by the process of the present invention, among embodiments in which the coating forms multiple solid particles located on the surface of particle (c), preferably the median diameter of the coating particles is smaller than the median diameter of the solid particles (c). Preferably, the ratio of the median diameter of the coating particles to the median diameter of the solid particles (c) is 0.1:1 or smaller; more preferably 0.05:1 or smaller; more preferably 0.02:1 or smaller; more preferably 0.01:1 or smaller.

Preferably, in the silver concentrate that is formed by the process of the present invention, among embodiments in which some or all of the solid particles (c) have a coating that contains silver ion and polymer (b), silver ion and the polymer (b) are both located on the surface of the particle (c). Among such embodiments, the silver ion and the polymer (b) may be mixed together or may be separated from each other, or a combination thereof. Preferably, some silver/polymer (b) complex is located on the surface of the particle (c).

The solids content of the silver concentrate that is formed by the process of the present invention is preferably 90% or higher; more preferably 95% or higher; more preferably 98% or higher; more preferably 99% or higher.

The silver concentrate of the present invention may be used for any purpose. Preferably, the silver concentrate of the present invention is mixed with a matrix polymer to form a plastic article. The silver concentrate may, for example, be mixed with matrix polymer that is in pellet or powder form and optionally with other ingredients, and the resulting mixture of solids may be melted and formed into a plastic article. The silver concentrate, may, for example, be added to melted matrix polymer (the melted matrix polymer may optionally already be mixed with other ingredients), and the resulting mixture may be formed into a plastic article.

Matrix Polymers may be made of any type of thermoplastic polymer. Preferred matrix polymers contain one or more polymer selected from the following categories (each category includes homopolymers and copolymers): polyolefins, polystyrene, poly(vinyl chloride), poly(vinyl acetate), acrylic polymers, polyamides, polyesters, polyurethanes, silicones, and mixtures thereof. More preferred are polyolefins; more preferred are polyethylene and polypropylene; more preferred is polyethylene.

Preferably, when a mixture of silver concentrate, matrix polymer, and optional other ingredients is made, the amount of concentrate is chosen so that the concentration of silver ions in the resulting mixture is, by weight based on the weight of the mixture, 5 ppm or more; more preferably 10 ppm or more; more preferably 20 ppm or more. Preferably, when a mixture of silver concentrate, matrix polymer, and optional other ingredients is made, the amount of concentrate is chosen so that the concentration of silver ions in the resulting mixture is, by weight based on the weight of the mixture, 2,000 ppm or less; more preferably 1,000 ppm or less; more preferably 500 ppm or less.

Some particular embodiments of the present invention are described as follows.

In some embodiments, a composition of the present invention is made and is then brought into contact with matrix polymer and optionally with other ingredients. Among such embodiments, the mixture of composition of the present invention, matrix polymer, and optional other ingredients is processed in the melt state and formed into a plastic article.

In some embodiments, a mixture of silver composition, matrix polymer, and optional other ingredients is made; such a mixture is herein called a "silver-modified polymer mixture." In some embodiments, a silver-modified polymer mixture is made by a multi-step process that contains the following steps. A composition of the present invention is made in which the amount of silver is 1% to 5% by weight based on the weight of the composition. That composition is then mixed with a second polymer, which is suitable as a matrix polymer, and optionally with other ingredients, and optionally processed in the melt state, to make a second composition in which the amount of silver is 0.5% to 2.5% by weight based on the weight of the second composition. The second composition is then mixed with a third polymer, which is also suitable as a matrix polymer and may be the same as or different from the first polymer, and optionally with other ingredients, and optionally processed in the melt state, to make a third composition, which qualifies as a silver-modified polymer mixture, and which has amount of silver of 30 to 300 ppm by weight based on the weight of the third composition.

The following are examples of the present invention.

Room temperature ("RT") was approximately 23°C.

The materials used are shown in Table 1.

**Table 1**

| **Label** | **Material** | **Supplier** |
|---|---|---|
| PEP1 | low density polyethylene (LDPE) powder, 500 micrometer | Alfa Aesar |
| SGP1 | Silica gel 60, 38.5-50 micrometer (300-400 mesh) | Jie Cai Commerce |
| Comp1 | Ionpure™ WPA antimicrobial, 1.6% silver in glass | Ishizuka Glass Co., Ltd. |
| Comp2 | AgION™ AJ10D antimicrobial, 2.5% silver in zeolite | AgION Technologies, Inc |
| Comp3 | AlphaSan® RC-2000 antimicrobial, 10% silver in zirconium phosphate | Milliken Chemical |
| LDPE | Low density polyethylene | Dow Chemical Co. |

### Preparation of Polymer Solution PS1

Using the methods described in US 7,846,856, polymer solution PS1 was made. The solvent was, by weight based on the weight of the solvent, 70% ethanol and 30% water. The polymer composition was, by weight based on the weight of polymer solids, 45% vinyl imidazole, 40% n-butyl acrylate, and 15% acrylic acid. The polymer solids were 22.5% by weight based on the weight of the solution. The amount of silver ion was 2.9% by weight based on the weight of the solution. The solution also contained ammonium, nitrate, and hydroxide ions. The solution had a light yellow color.

### Preparation of Concentrates.

72 g of either PEP1 or SGP1 were gradually added into 100 g PS1 under 1000 rpm stirring (IKA stirrer) at RT. After mixing for 30 min, the resulting yellow viscous fluid was taken out and dried at 100°C in a vacuum oven (DZF-6030A, Shanghai Yihen) for 72 hour. The dried mixtures were then ground to micropowders with a mortar/pestle. The dried mixture made with PEP1 is herein called Conc-PEPl, and the dried mixture made with SGP1 is herein called Conc-SGP1.

For comparative purposes, ultraconcentrates were also prepared. These were solid materials having silver ion concentration of approximately 10% by weight. These ultraconcentrates are comparative examples. Ultraconcentrate UC1 was prepared by evaporating PS1 to dryness. Ultraconcentrate UC2 was prepared by adding nitric acid to PS1 to bring the pH to 6.91 and then evaporating to dryness.

Discoloration of concentrates was studied as follows.

For each sample that was tested, two 20-ml flasks were prepared, and 100 mg of sample was placed in each. Both flasks were heated in an oil bath; one was jacketed with nitrogen and the other was exposed to air. Discoloration was monitored during the heating from RT up to approximately 250°C. Samples tested in this way were UC1, UC2, Conc-PEP1, and Conc-SBPl. Similar experiments were conducted for a certain amount of three comparative inorganic commercial antibacterial powders (Comp1, Comp2, and Comp3) under air with the same dosage of silver ion as in Conc-PEP1 and Conc-SGP1.

Compounding with matrix plastic was performed as follows.

The compounding was done in a HAAKE PolyLab™ Mixer (Thermo). 49.5 g LDPE pellets were first melted for 5 min under 60 revolutions per minute (rpm) and then continuously compounded for another 5 min after adding concentrate or ultraconcentrate or comparative commercial antibacterial powder. The theoretical silver ion content in the compounded sample was 50 ppm by weight based on the weight of the compounded sample. The compounding temperature was 120°C. The compounded samples were then compression molded in a hot press at the same temperatures for 3 minutes to obtain the final sheets with a thickness of 3 mm. Compounding three comparative samples (Comp1, Comp2, and Comp3) and AgNO₃ with LDPE was also carried out at 120°C for total of 10 min.

### Aging Test

Plastic samples were cut into rectangular pieces of 40×40 mm, and then placed in an aging oven (GDW series, Wuxi Suwei) at 60°C for 8 weeks. At a given time, the samples were taken out and cooled to RT. The overall color change was scanned by an Epson scanner. The a*, b* and L* values were measured by a colorimeter (HunterLab ColorQuest™ XE colorimeter) with data averaged from at least 3 points of each piece. The calculated yellow index was used to evaluate the anti-aging abilities of the samples. As a comparison, the benchmark samples were also measured by the same method.

### Antimicrobial Test

Plastic samples before and after aging were then tested on the antimicrobial performance using the ATCC 6538P method. Briefly, plastic sheets were cut into square pieces of 40×40 mm, and then inoculums (*S. Aureus*) were added on a 30×30 mm square. Colony-forming units (cfu) of the cultured pieces were tested after 24 hours. Blank plastic pieces without silver were also tested. Antimicrobial efficacy (log Kill) was then defined as log₁₀ (cfu on blank test piece after 24 hours divided by cfu on treated test piece after 24 hours). All data were averaged from 2 parallel specimens. The benchmark samples were also tested as a comparison.

In some experiments, specimens were wiped, then aged, and then given the antimicrobial test. The wiping procedure was as follows: samples were placed successively in ethanol and water under ultrasonication for 1.5 h and 30 min, respectively. After that, the samples were taken out, and the surfaces were wiped by hand for another 15 min. Finally, they were rinsed with water followed by drying.

### Example 1: Results of the discoloration test.

Comp1, Comp2, and Comp3 remained white throughout the test. The other samples showed color, in order of discoloration, as follows: LY (light yellow, least discolored); Y (yellow); Br (Brown); dBr (dark brown); vdBr (very dark brown); Blk (black).

**Table 2: Color of samples versus temperature under Nitrogen**

| | N2 | N2 | N2 | N2 |
|---|---|---|---|---|
| **°C** | **UC1** | **UC2** | **Conc-PEP1** | **Conc-SGP1** |
| 23 | LY | LY | LY | LY |
| 100 | Y | LY | LY | LY |
| 120 | Br | Y | | |
| 130 | | | Y | LY |
| 150 | Blk | Br | | |
| 170 | | | Br | LY |
| 200 | | | vdBr | LY |

Table 2 shows that, in the test under Nitrogen, the Conc samples were as good as or better than the UC samples.

**Table 3: Color of samples versus temperature under Air**

| | Air | Air | Air | Air |
|---|---|---|---|---|
| **°C** | **UC1** | **UC2** | **Conc-PEP1** | **Conc-SGP1** |
| 23 | LY | LY | LY | LY |
| 100 | Br | Y | LY | LY |
| 120 | dBr | Br | | |
| 130 | | | Y | LY |
| 150 | Blk | dBr | | |
| 170 | | | dBr | Y |
| 200 | | | Blk | Br |

Table 3 shows that, under Air, the Conc samples were better than the UC samples.

### Example 2: Results of the test for antimicrobial activity on the surface of plastic sheets versus time.

The matrix plastic was LDPE; the amount of silver compound was chosen to give a theoretical concentration of silver ion in each sample was 50 ppm by weight based on the weight of the sample. Storage temperature was 60°C. Log Kill values of 3 or higher indicate effectively complete killing of microbes.

**Table 4: Log Kill of plastic sheets versus time**

| Sample | 0 weeks | 2 weeks | 4 weeks |
|---|---|---|---|
| Conc-PEP1 | 3.9 | 3.4 | 3.4 |
| Comp1 | 3.0 | 1.2 | 1.2 |
| Comp2 | 4.1 | 1.4 | 0.7 |
| Comp3 | 0.6 | 0.2 | 0.3 |

Table 4 shows that the inventive sample is much better than the comparative samples at maintaining antimicrobial activity during storage.

### Example 3: Results of the test for antimicrobial activity on the surface of plastic sheets after wiping.

The matrix plastic was LDPE; the amount of silver compound was chosen to give a theoretical concentration of silver ion in each sample was 50 ppm by weight based on the weight of the sample. Log Kill values of 3 or higher indicate effectively complete killing of microbes. Storage temperature was 60°C.

**Table 5: Log Kill of plastic sheets after wiping**

| Sample | 0 weeks | 4 weeks |
|---|---|---|
| Conc-PEP1 | 3.0 | 3.8 |
| Comp2 | 1.1 | 0.2 |

The inventive sample is better than the comparative sample.

### Example 4: Distribution of antimicrobial compound in the matrix plastic.

The distribution of Conc-PEP1 and Conc-SGP1 in matrix plastic were compared to the distribution of antimicrobial compound in the samples that were prepared and reported in US 7, 846,856. When Conc-PEP1 and Conc-SGP1 were compounded into LDPE as described above, using compounding temperature of 120°C , the samples were white and translucent, similar in appearance to similarly compounded sheets of LDPE alone, which shows that the silver concentrate was distributed evenly throughout the sample. The samples reported in US 7,846,856 were made by drying a silver/polymer complex to make an ultraconcentrate outside of the definition of the present invention. That ultraconcentrate was then mixed with powdered matrix resin and then extruded. The resulting plastic articles were cloudy, showing that the antimicrobial compound did not distribute evenly.

### Example 5: Observation of Conc-PEP1 and Conc-SGP1.

Samples of Conc-PEP1 and Conc-SGP1 were coated with a thin carbon layer and observed using a Scanning Electron Microscope (Brucker Company). The Conc-PEP1 particles appeared to have median diameter of approximately 500 micrometer. The coating on the Conc-PEP1 appeared as discrete particles on the surface of the solid LDPE particles. The coating particles appeared to have median diameter of less than one micrometer. A representative coating particle was analyzed by X-ray spectroscopy, which verified the presence of silver in the coating particle. The Conc-SGl particles appeared to have median diameter of approximately 40 micrometer. The coating on the Conc-SGP1 appeared as discrete particles on the surface of the solid silica gel particles. The coating particles appeared to have median diameter of less than one micrometer. A representative coating particle was analyzed by X-ray spectroscopy, which verified the presence of silver in the coating particle.

## Claims

1. A method of making a silver-containing concentrate, said method comprising the step of isolating the solid materials from a liquid composition that comprises
(a) silver cation,
(b) a polymer that has pendant unsaturated or aromatic heterocycles, and
(c) solid particles having median diameter of 2 mm or smaller.

2. The method of claim 1, wherein, in said liquid composition, some or all of said silver cation and said polymer are in the form of a complex.

3. The method of claim 1 wherein said liquid composition additionally comprises a solvent that comprises water.

4. The method of claim 3, wherein said solvent additionally comprises one or more alkyl alcohol.

5. The method of claim 1, wherein the amount of silver ion in said liquid composition is 0.2% to 5%.
